# FASCICULE DE BREVET EUROPEEN

(11) **EP 4 090 558 B1**
(45) Date de publication et mention de la délivrance du brevet: **20.08.2025**
(21) Numéro de dépôt: 21704859.4
(22) Date de dépôt: 11.01.2021
(51) Int. Cl.: B60R 21/02

(54) **CLOISON VERTICALE D'ARRÊT DE CHARGE RENFORCÉE POUR VÉHICULE AUTOMOBILE UTILITAIRE**
VERSTÄRKTE VERTIKALE LADUNGSSICHERUNGSWAND FÜR NUTZFAHRZEUGE
REINFORCED VERTICAL LOAD-STOP PARTITION FOR UTILITY MOTOR VEHICLE

(30) Priorité: 15.01.2020 FR 2000375
(43) Date de publication de la demande: 23.11.2022
(73) Titulaire: Stellantis Auto SAS, 78300 Poissy (FR)
(72) Inventeur: VALTIER, Alain, 78770 AUTOUILLET (FR); PERU, Marc, 92290 CHATENAY MALABRY (FR); DE SOUSA FERNANDES, Rafael, 75116 PARIS 16 (FR); ZEITOUNI, Richard, 78390 BOIS D ARCY (FR); FONFREDE, Stephane, 90000 BELFORT (FR)
(74) Mandataire: BCIP
(86) Numéro de dépôt international: PCT/FR2021/050038
(87) Numéro de publication internationale: WO 2021/144523

(56) Documents cités:
- EP-A1- 2 080 692
- EP-A1- 2 275 310
- EP-B1- 2 080 692
- EP-B1- 2 275 310
- WO-A1-2019/115461
- US-A- 4 621 856
- US-A1- 2015 246 694
- US-B2- 9 174 685

## Description

### Domaine technique

L'invention a trait au domaine des véhicules automobiles, et plus particulièrement aux véhicules automobiles utilitaires.

### Technique antérieure

Les véhicules automobiles utilitaires comprennent généralement un habitacle cloisonné, avec une zone avant pour les passagers, et une zone arrière de chargement. Ce cloisonnement est réalisé grâce à une cloison verticale d'arrêt de charge, qui sert notamment de protection pour les passagers lorsque le véhicule comprend des chargements à l'arrière, en évitant l'introduction desdits chargements dans la zone avant de passagers lors d'un freinage brutal.

À l'heure actuelle, il est désirable de prévoir des véhicules utilitaires électriques, notamment pour des raisons écologiques. Ces véhicules utilitaires ont la particularité d'être plus lourds que des véhicules utilitaires à combustion, en raison de la présence des batteries de traction qui ajoutent une masse comprise entre 300kg et 500kg, suivant l'autonomie du véhicule désirée. L'ajout de cette masse rend nécessaire l'addition de renforts supplémentaires aux véhicules, afin d'améliorer leur résistance lors des chocs, notamment latéraux.

Le document de brevet publié US 9,174,685 B2 divulgue une cloison verticale d'arrêt de charge pour des véhicules automobiles utilitaires. Cette cloison d'arrêt de charge est positionnée au niveau des montants intermédiaires du véhicule. Elle comprend une structure périphérique et trois panneaux ouvrants. Elle est configurée pour pouvoir être attachée aux montants intermédiaires sans perturber les systèmes de sécurité qu'ils peuvent renfermer, comme des coussins gonflables. Cette cloison d'arrêt de charge n'améliore pas la résistance aux chocs latéraux occasionnés au niveau de la zone avant pour passagers du véhicule.

### Exposé de l'invention

L'invention a pour objectif de pallier au moins un des inconvénients de l'état de la technique susmentionné. Plus particulièrement, l'invention a pour objectif de permettre à un véhicule utilitaire potentiellement alourdi par des batteries de traction de résister en cas de choc latéral.

L'invention a pour objet une structure de véhicule automobile utilitaire, comprenant : les caractéristiques techniques de la revendication 1.

Les montants intermédiaires peuvent être couramment désignés montants B.

Avantageusement, la poutre transversale présente une largeur d'au moins 150mm.

Selon un mode avantageux de l'invention, chacune des deux faces d'extrémité est à une distance moyenne du montant intermédiaire correspondant inférieure à 150mm.

Selon un mode avantageux de l'invention, au moins une des cales amortissantes est en mousse avec une densité supérieure ou égale à 80 grammes par litre, ou forme un boîtier en matière plastique avec une paroi extérieure et des nervures.

Selon un mode avantageux de l'invention, la poutre transversale est intégralement formée avec la cloison par emboutissage d'une tôle.

Selon un mode avantageux de l'invention, la structure comprend, en outre, un profilé transversal logé dans la poutre transversale emboutie.

Selon un mode avantageux de l'invention, les deux faces d'extrémité de la poutre transversale sont formées par la tôle emboutie.

Selon un mode avantageux de l'invention, les deux faces d'extrémité de la poutre transversale sont formées par des extrémités du profilé transversal.

L'invention a également pour objet une cloison verticale d'arrêt de charge destinée à être disposée dans un habitacle de véhicule automobile utilitaire, en appui sur deux montants intermédiaires de bas de caisse et opposés transversalement dudit habitacle, en vue de former une séparation entre une zone avant pour passagers et une zone arrière de chargement, remarquable en ce que ladite cloison comprend ou forme, à un bord inférieur et dépassant vers l'avant, une poutre transversale destinée à se situer entre les deux montants intermédiaires de manière à pouvoir limiter un enfoncement desdits montants intermédiaires en cas de choc latéral.

Toutes les caractéristiques décrites ci-avant pour le véhicule automobile sont également divulguées en combinaison avec la cloison verticale d'arrêt de charge en tant que telle.

Les mesures de l'invention sont intéressantes en ce qu'elles permettent de limiter l'enfoncement des montants intermédiaires en cas de choc latéral, ainsi que la rotation desdits montants vers l'habitacle. Cette invention est particulièrement efficace pour des véhicules électriques, alourdis par la présence de batteries de traction supplémentaires. Puisque seule la cloison verticale d'arrêt de charge est modifiée pour améliorer la résistance des véhicules électriques utilitaires aux chocs latéraux, cela limite les modifications à effectuer sur ces véhicules, donc diminue les coûts de fabrication. La présence d'une poutre transversale sur un bord inférieur de la cloison n'est pas pénalisante pour la zone passager, puisque cette poutre occupe un espace disponible en bas et à l'arrière des sièges avant du véhicule. L'ajout additionnel d'un profilé transversal dans la poutre permet d'augmenter la rigidité de la structure et donc de retenir plus facilement le montant intermédiaire soumis au choc. La présence d'une cale amortissante permet en outre d'anticiper l'appui du poteau lors d'un choc sur la cloison, donc de rendre plus précoce l'appui et le fonctionnement de l'invention. La cale d'amortissement peut en outre être rendue déformable en fin de choc et ainsi absorber une partie de l'énergie émise. L'invention est enfin facile à mettre en œuvre et à fabriquer, avec des techniques et des matériaux connus de l'homme du métier.

D'autres caractéristiques et avantages de la présente invention seront mieux compris à l'aide de la description et des dessins.

### Brève description des dessins

[Fig 1] est une vue du dessus d'un véhicule utilitaire selon l'état de l'art, suite à un choc latéral poteau ;
[Fig 2] est une vue en perspective et latérale d'une structure de véhicule automobile utilitaire avec une cloison verticale d'arrêt de charge selon l'invention ;
[Fig 3] est une vue en perspective et de l'avant de la cloison verticale d'arrêt de charge selon l'invention ;
[Fig 4] est une vue de l'arrière de la cloison verticale d'arrêt de charge de la figure 3 ;
[Fig 5] est une vue agrandie de la cloison verticale d'arrêt de charge des figures 3 et 4 accolée à un montant intermédiaire correspondant, au niveau d'une face d'extrémité droite ;
[Fig 6] est une vue du dessus d'un véhicule utilitaire suite à un choc latéral poteau, lorsque le véhicule comprend la cloison verticale d'arrêt de charge des figures 3 à 5.

### Description détaillée

Les exemples décrits ci-après sont donnés à titre indicatif, mais d'autres applications ou modes de réalisation de l'invention non-décrits peuvent être envisagés. La flèche x représente le sens normal (en marche avant) de déplacement du véhicule. L'avant et l'arrière sont donc définis suivant cette flèche, la gauche et la droite suivant un positionnement à l'intérieur du véhicule et dans le sens normal de déplacement du véhicule.

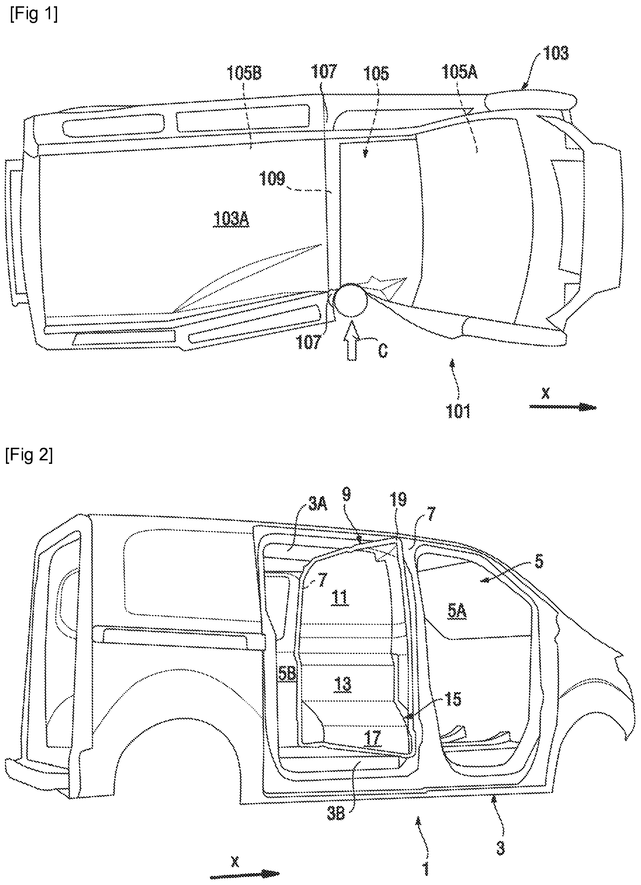

La figure 1 montre un véhicule automobile utilitaire connu, suite à un choc latéral poteau situé à l'avant d'une cloison verticale d'arrêt de charge.

Le véhicule 101 comprend une structure de carrosserie 103 avec un habitacle 105. La structure de carrosserie 103 comprend un bas de caisse (non visible sur cette figure) et un toit 103A délimitant l'habitacle 105, cet habitacle 105 comprenant deux montants intermédiaires 107 de bas de caisse opposés transversalement audit habitacle 105, donc situés de chaque côté du véhicule 101. Chaque montant intermédiaire 107 s'étend depuis le bas de caisse vers le toit 103A du véhicule 101. L'habitacle 105 est de plus divisé en deux zones : une zone avant 105A pour passagers et une zone arrière 105B de chargement, dont la séparation est réalisée grâce à la cloison verticale d'arrêt de charge 109, en appui sur les montants intermédiaires 107. Lors d'un choc latéral poteau C occasionné à l'avant du montant intermédiaire 107 droit, l'enfoncement dudit montant intermédiaire 107 entraîne des dommages latéralement au niveau du toit 103A et du bas de caisse (non visible sur cette figure) du véhicule 101. L'enfoncement du montant intermédiaire 107 se traduit également par une rotation dudit montant 107 dans l'habitacle 105, ce qui peut causer des dommages importants aux passagers. Cet enfoncement est d'autant plus important que la masse du véhicule 101 est grande, ce phénomène est donc accentué lorsque les véhicules utilitaires 101 sont à traction électrique, du fait de la présence de batteries de traction.

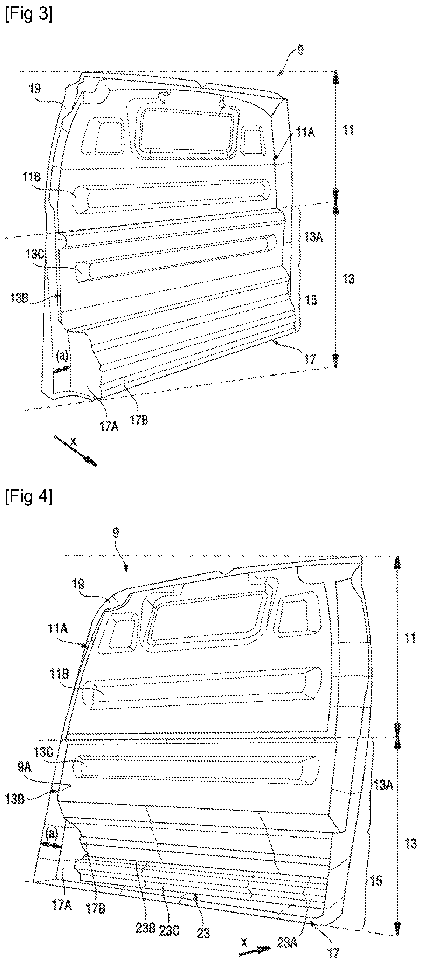

La figure 2 montre une vue latérale et en perspective d'une structure de véhicule automobile utilitaire selon l'invention. Les figures 3 et 4 montrent deux vues, respectivement de l'avant et de l'arrière, d'une cloison verticale d'arrêt de charge selon l'invention. Les figures 2 à 4 seront décrites ensemble.

Le véhicule automobile utilitaire 1 selon l'invention comprend la structure de carrosserie 3 avec un toit 3A et un bas de caisse 3B. Le toit 3A et le bas de caisse 3B servent, avec deux montants intermédiaires 7 de bas de caisse 3B qui s'opposent transversalement dans un habitacle 5, à délimiter l'habitacle 5. La cloison verticale d'arrêt de charge 9 est, positionnée en appui sur les montants intermédiaires 7, cette cloison 9 étant ainsi disposée dans l'habitacle 5 de manière à permettre une séparation entre une zone avant 5A pour les passagers et une zone arrière 5B de chargement du véhicule 1. La cloison verticale d'arrêt de charge 9 a également vocation à éviter l'introduction du chargement dans la zone avant 5A pour les passagers, notamment en cas de freinage important.

La cloison verticale d'arrêt de charge 9 selon l'invention est avantageusement réalisée en tôle métallique, et s'étend, au moins partiellement, à l'arrière des montants intermédiaires 7 de la structure 3 du véhicule 1. Cette cloison 9 comprend une portion supérieure 11 et une portion inférieure 13, la portion inférieure 13 comprenant ou formant, dans un bord inférieur 15, une poutre transversale 17. Cette poutre transversale 17 dépasse vers l'avant du véhicule 1 et est située entre les montants intermédiaires 7 du véhicule 1. La cloison verticale d'arrêt de charge 9 comprend en outre, un bord périmétrique 19 qui va permettre sa fixation aux montants intermédiaires 7, au toit 3A et au plancher du véhicule 1.

Plus spécifiquement, la portion supérieure 11 de la cloison verticale d'arrêt de charge 9 s'étend sur approximativement la moitié supérieure de ladite cloison 9. Cette portion supérieure 11 peut former un renfoncement 11A, ce renfoncement 11A s'étendant vers l'arrière du véhicule 1 et au-delà des montants intermédiaires 7. Ce renfoncement 11A permet aux passagers du véhicule 1 d'adapter le dossier du ou des sièges selon leurs besoins.

La portion inférieure 13 de la cloison verticale d'arrêt de charge 9 comprend une partie supérieure 13A, au-dessus de la poutre transversale 17, qui peut également former un renfoncement 13B. Les portions supérieure 11 et inférieure 13 peuvent présenter, en outre, des nervures (11B, 13C) qui sont aptes à améliorer la résistance de la cloison 9 aux chocs.

La poutre transversale 17 de la cloison verticale d'arrêt de charge 9 présente deux faces d'extrémité 17A situées en vis-à-vis des montants intermédiaires 7. Les faces d'extrémité 17A sont positionnées à une distance (a) moyenne du montant intermédiaire 7 correspondant inférieure à 15mm. Avantageusement, la poutre transversale 17 est intégralement formée avec la cloison verticale d'arrêt de charge 9 par emboutissage de tôle. Ainsi, les deux faces d'extrémité 17A de la poutre transversale 17 sont formées par la tôle emboutie. La poutre transversale 17 de la cloison verticale d'arrêt de charge 9 peut présenter, en outre, des nervures longitudinales 17B, ces nervures 17B étant aptes à améliorer la résistance de la cloison 9 lors d'un choc.

Optionnellement, en référence à la figure 4, la structure 3 de véhicule 1 peut comprendre un profilé transversal 23, logé dans la poutre transversale 17 emboutie, et qui s'étend entre les faces d'extrémité 17A. Ainsi, les faces d'extrémité 17A de la poutre transversale 17 sont formées par des extrémités 23A du profilé transversal 23. Avantageusement, ce profilé transversal 23 est un embouti, et présente une section transversale en U couché, avec deux semelles supérieure 23B et inférieure 23C qui vont être fixées à une face arrière 9A de la cloison verticale d'arrêt de charge 9. Ce profilé transversal 23 est avantageusement réalisé avec une tôle en acier.

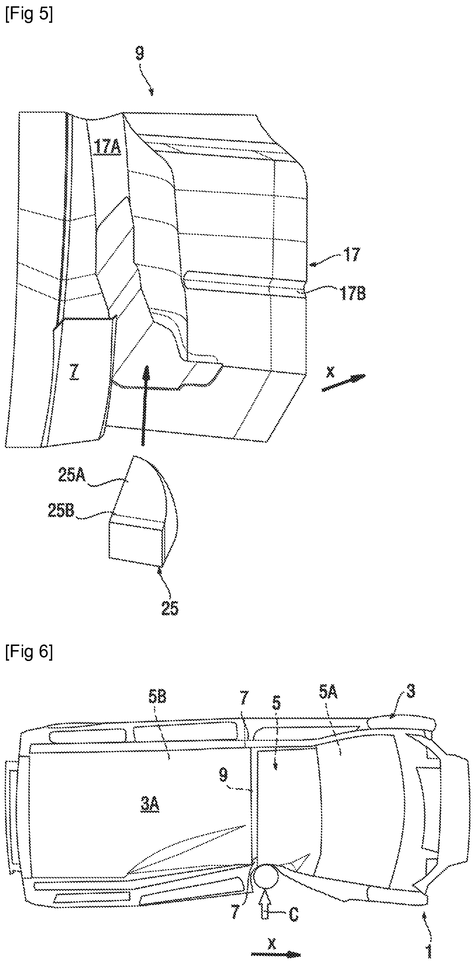

La figure 5 est une vue en perspective de la face d'extrémité droite de la cloison verticale d'arrêt de charge selon l'invention, fixée au montant intermédiaire correspondant.

La face d'extrémité 17A de la poutre transversale 17 comprend une cale amortissante 25. Cette cale 25 est positionnée entre la face d'extrémité 17A et le montant intermédiaire 7 correspondant. La cale 25 peut être réalisée en mousse avec une densité supérieure ou égale à 80 grammes par litre, ou former un boîtier en matière plastique avec une paroi extérieure 25A et des nervures 25B. La cale 25 présente avantageusement une section transversale de forme sensiblement triangulaire dépendante de la forme de la poutre 17, et peut être fixée à la poutre 17 par des éléments de fixation ou par collage. La cale amortissante 25 est avantageusement réalisée dans des matériaux composites, tels que le BMC (acronyme de « Bulk Molding Compound ») ou le SMC (acronyme de « Sheet Molding Compound »).

De manière générale, la cale amortissante 25 et le profilé transversal 23 peuvent également être montés ensemble dans la cloison verticale d'arrêt de charge 9.

La figure 6 montre une vue du dessus d'un véhicule automobile avec la cloison verticale d'arrêt de charge renforcée selon l'invention, après un choc latéral sur le côté droit du véhicule.

La structure 3 du véhicule 1 comprend l'habitacle 5 avec les deux zones avant 5A et arrière 5B, séparées par la cloison verticale d'arrêt de charge 9. Cette cloison 9 est maintenue par les montants intermédiaires 7 précédemment décrits. Plus précisément sur cette figure, un choc latéral C, réalisé à l'aide d'un poteau, est effectué à l'avant du montant intermédiaire 7 droit du véhicule 1, au niveau de la zone avant 5A de l'habitacle 5. Cependant, contrairement à la figure 1, on peut voir que l'enfoncement du montant intermédiaire 7 dans l'habitacle 5 du véhicule 1 est diminuée d'au moins de 20%.

## Revendications

1. Structure (3) de véhicule automobile utilitaire (1), comprenant :
- un habitacle (5) avec deux montants intermédiaires (7) de bas de caisse (3B), opposés transversalement ; et
- une cloison verticale d'arrêt de charge (9) disposée dans l'habitacle (5), en appui sur les montants intermédiaires (7), qui comprend ou forme, à un bord inférieur (15) et dépassant vers l'avant, une poutre transversale (17) située entre les montants intermédiaires (7) de manière à pouvoir limiter un enfoncement desdits montants intermédiaires (7) en cas de choc latéral, la poutre transversale (17) comprenant deux faces d'extrémité (17A) situées en vis-à-vis des montants intermédiaires (7), respectivement,
**caractérisée en ce que** ladite structure (3) comprend une cale amortissante (25) située entre chacune des deux faces d'extrémité (17A) et le montant intermédiaire (7) correspondant.

2. Structure (3) de véhicule automobile utilitaire (1), selon la revendication 1, **caractérisée en ce que** chacune des deux faces d'extrémité (17A) est à une distance (a) moyenne du montant intermédiaire (7) correspondant inférieure à 150mm.

3. Structure (3) de véhicule automobile utilitaire (1), selon la revendication 1 ou 2, **caractérisée en ce qu'**au moins une des cales amortissantes (25) est en mousse avec une densité supérieure ou égale à 80 grammes par litre, ou forme un boîtier en matière plastique avec une paroi extérieure (25A) et des nervures (25B).

4. Structure (3) de véhicule automobile utilitaire (1), selon l'une des revendications 1 à 3, **caractérisée en ce que** la poutre transversale (17) est intégralement formée avec la cloison (9) par emboutissage d'une tôle.

5. Structure (3) de véhicule automobile utilitaire (1), selon la revendication 4, **caractérisée en ce que** ladite structure (3) comprend, en outre, un profilé transversal (23) logé dans la poutre transversale (17) emboutie.

6. Structure (3) de véhicule automobile utilitaire (1), selon l'une des revendications 1 à 3, et selon l'une des revendications 4 et 5, **caractérisée en ce que** les deux faces d'extrémité (17A) de la poutre transversale (17) sont formées par la tôle emboutie.

7. Structure (3) de véhicule automobile utilitaire (1), selon l'une des revendications 1 à 4, et selon la revendication 5, **caractérisée en ce que** les deux faces d'extrémité (17A) de la poutre transversale (17) sont formées par des extrémités (23A) du profilé transversal (23).

## Patentansprüche

1. Struktur (3) eines Nutzkraftfahrzeugs (1), die Folgendes umfasst:
- ein Fahrgastraum (5) mit zwei quer gegenüberliegenden Zwischenstützen (7) des Unterbodens (3B) und
- eine an den Zwischenstützen (7) anliegende vertikale Ladesperrwand (9) im Fahrgastraum (5), die an einem unteren Rand (15) einen zwischen den Zwischenstützen (7) angeordneten, nach vorne ragenden Querbalken (17) aufweist oder bildet, sodass ein Eindrücken der Zwischenstützen (7) bei einem Seitenaufprall begrenzt werden kann, wobei der Querbalken (17) zwei den Zwischenstützen (7) gegenüberliegende Stirnflächen (17A) aufweist,
Die Struktur (3) ist **dadurch gekennzeichnet, dass** sie einen Dämpfungskeil (25) umfasst, der zwischen jeder der beiden Stirnflächen (17A) und dem entsprechenden Zwischenständer (7) angeordnet ist.

2. Struktur (3) eines Nutzfahrzeugs (1) nach Anspruch 1, **dadurch gekennzeichnet, dass** jede der beiden Stirnflächen (17A) einen mittleren Abstand (a) von der entsprechenden Zwischenstange (7) von weniger als 150 mm aufweist.

3. Struktur (3) eines Nutzfahrzeugs (1) nach Anspruch 1 oder 2, **dadurch gekennzeichnet, dass** mindestens einer der Dämpfungskeile (25) aus Schaumstoff mit einer Dichte von mindestens 80 Gramm pro Liter besteht oder ein Kunststoffgehäuse mit einer Außenwand (25A) und Rippen (25B) bildet.

4. Struktur (3) eines Nutzfahrzeugs (1) nach einem der Ansprüche 1 bis 3, **dadurch gekennzeichnet, dass** der Querträger (17) mit der Trennwand (9) durch Tiefziehen eines Blechs einstückig ausgebildet ist.

5. Struktur (3) eines Nutzfahrzeugs (1) nach Anspruch 4, **dadurch gekennzeichnet, dass** die Struktur (3) ferner ein Querprofil (23) aufweist, das in dem tiefgezogenen Querbalken (17) untergebracht ist.

6. Struktur (3) eines Nutzfahrzeugs (1) nach einem der Ansprüche 1 bis 3 und nach einem der Ansprüche 4 und 5, **dadurch gekennzeichnet, dass** die beiden Endflächen (17A) des Querträgers (17) durch das Tiefziehblech gebildet sind.

7. Struktur (3) eines Nutzfahrzeugs (1) nach einem der Ansprüche 1 bis 4 und nach Anspruch 5, **dadurch gekennzeichnet, dass** beide Endflächen (17A) des Querträgers (17) durch Enden (23A) des Querprofils (23) gebildet sind.

## Claims

1. Structure (3) of a commercial motor vehicle (1), comprising:
- a passenger compartment (5) with two intermediate uprights (7) of the bottom of the body (3B), transversely opposite; and
- a vertical partition for load shutdown (9) arranged in the passenger compartment (5), bearing on the intermediate uprights (7), which comprises or forms, at a lower edge (15) and protruding forwards, a transverse beam (17) located between the intermediate uprights (7) so as to be able to limit a depression of said intermediate uprights (7) in the event of a lateral impact, the transverse beam (17) comprising two end faces (17A) located opposite the intermediate uprights (7), respectively,
**characterised in that** said structure (3) comprises a damping wedge (25) located between each of the two end faces (17A) and the corresponding intermediate upright (7).

2. Structure (3) of a commercial motor vehicle (1) according to claim 1, **characterised in that** each of the two end faces (17A) is at an average distance (a) from the corresponding intermediate upright (7) of less than 150 mm.

3. Structure (3) of a commercial motor vehicle (1) according to claim 1 or 2, wherein at least one of the damping shims (25) is in foam with a density greater than or equal to 80 grammes per litre, or forms a plastic housing with an outer wall (25A) and ribs (25B).

4. Structure (3) of a commercial motor vehicle (1) according to one of Claims 1 to 3, **characterised in that** the transverse beam (17) is integrally formed with the partition (9) by stamping of a sheet metal.

5. Structure (3) of a commercial motor vehicle (1) according to claim 4, **characterised in that** said structure (3) further comprises a transverse section (23) housed in the pressed transverse beam (17).

6. Structure (3) of a commercial motor vehicle (1) according to one of Claims 1 to 3 and according to one of Claims 4 and 5, **characterised in that** the two end faces (17A) of the transverse beam (17) are formed by the pressed sheet metal.

7. Structure (3) of a commercial motor vehicle (1) according to one of Claims 1 to 4 and according to Claim 5, **characterised in that** the two end faces (17A) of the transverse beam (17) are formed by ends (23A) of the transverse section (23).
